# EUROPÄISCHE PATENTSCHRIFT

(11) **EP 2 751 737 B1**
(45) Veröffentlichungstag und Bekanntmachung des Hinweises auf die Patenterteilung: **12.04.2017**
(21) Anmeldenummer: 12781055.4
(22) Anmeldetag: 15.10.2012
(51) Int. Cl.: G06K 7/10, H04B 5/00

(54) **VERFAHREN UND SYSTEM ZUR ENERGIEVERSORGUNG ZUMINDEST EINES MOBILTEILS IN EINEM DRAHTLOSEN KOMMUNIKATIONSSYSTEM , INSBESONDERE VON RFID-TAGS EINES RFID SYSTEMS.**
METHOD AND SYSTEM FOR SUPPLYING ENERGY TO AT LEAST ONE MOBILE COMPONENT IN A WIRELESS COMMUNICATIONS SYSTEM, IN PARTICULAR TO RFID TAGS OF AN RFID SYSTEM
PROCÉDÉ ET SYSTÈME D'ALIMENTATION EN ÉNERGIE D'AU MOINS UN ÉLÉMENT MOBILE DANS UN SYSTÈME DE COMMUNICATION SANS FIL, EN PARTICULIER DE BALISES RFID D'UN SYSTÈME RFID

(30) Priorität: 14.10.2011 DE 102011084538
(43) Veröffentlichungstag der Anmeldung: 09.07.2014
(73) Patentinhaber: Siemens Aktiengesellschaft, 80333 München (DE)
(72) Erfinder: ZIROFF, Andreas, 80469 München (DE); HÜTTNER, Jörg, 81825 München (DE); MÜLLER, Dominikus Joachim, 80687 München (DE)
(86) Internationale Anmeldenummer: PCT/EP2012/070417
(87) Internationale Veröffentlichungsnummer: WO 2013/053945

(56) Entgegenhaltungen:
- EP-A1- 1 610 258
- US-A1- 2010 039 231

## Beschreibung

Die Erfindung betrifft ein Verfahren zur Energieversorgung zumindest eines Mobilteils in einem drahtlosen Kommunikationssystem und ein System von Basisstationen eines drahtlosen Kommunikationssystems.

Bei Kommunikationssystemen ist es bekannt, einzelne Mobilteile über ein Funkfeld mit Energie zu versorgen. Ein Beispiel sind passive RFID-Systeme, deren Mobilteile, sogenannte RFID-Tags, insbesondere RFID-Chips mit einem RFID-Transponder, über das Funkfeld Energie gewinnen und damit ein internes Rechenwerk ohne weitere Energiezufuhr für eine Zeitdauer betreiben können, solange das Funkfeld ausreichend Energie liefert. Tritt dieser Fall ein, kann ein Tag beispielsweise ein Antwortsignal aussenden, welches von einer Basisstation bzw. von einem entsprechenden Lesegerät empfangen werden kann. Um auch ein Antwortsignal bei nichtausreichender Funkfeldstärke zu erhalten und um die Reichweite zu erhöhen, werden aktive Tags mit eigener Stromquelle, z.B. in Form einer Batterie, verwendet.

US 2010/0039231 A1 beschreibt eine Datenerfassung einer Vielzahl von Datenträgern. Dabei wird eine Vielzahl von Datenträgern sequentiell angesprochen, welche fix zueinander in einem Lagerregal befindlich sind. Es werden kleine zeitliche und räumliche Fenster innerhalb eines größeren Bereichs, etwa eines Regalfachs, quasi zufällig und in Gänze gerastert, um nicht mit sämtlichen Datenträgern der Vielzahl zeitgleich kommunizieren zu müssen.

EP 1610258 A1 offenbart einen RFID-Kommunikationsvorrichtung, welche die Einfallsrichtung von Radiowellen eines RFID-Tags bestimmt.

Es ist Aufgabe der Erfindung, ein verbessertes Verfahren und ein verbessertes System zur Energieversorgung zumindest eines Mobilteils in einem drahtlosen Kommunikationssystem zu schaffen.

Diese Aufgabe der Erfindung wird mit einem Verfahren mit den in Anspruch 1 angegebenen Merkmalen sowie mit einem System mit den in Anspruch 9 angegebenen Merkmalen gelöst. Vorteilhafte Weiterbildungen der Erfindung sind in den zugehörigen Unteransprüchen, der nachfolgenden Beschreibung und der Zeichnung angegeben.

Das erfindungsgemäße Verfahren dient zur Energieversorgung zumindest eines Mobilteils. Dazu wird das Verfahren in einem drahtlosen Kommunikationssystem mit zwei oder mehr Basisstationen durchgeführt. Bei dem erfindungsgemäßen Verfahren werden mittels zumindest zwei der Basisstationen kohärent elektromagnetische Wellen gesendet.

Besonders wesentlich ist bei dem erfindungsgemäßen Verfahren, dass die Basisstationen ihre Energie in Form von elektromagnetischen Wellen in kohärenter Weise, also mit festem Phasenbezug der von verschiedenen Basisstationen ausgesendeten elektromagnetischen Wellen zueinander, aussenden.

Dieser feste Phasenbezug ist erfindungsgemäß derart nutzbar, dass es an bestimmten Positionen im Raum zu einer Erhöhung der dort messbaren elektromagnetischen Funkfeldstärke im Vergleich zu einem System mit nur einer Basisstation kommt.

Eine Erhöhung tritt an einer solchen Position genau dann ein, wenn die elektromagnetischen Wellen der einzelnen Basisstationen dort mit gleicher (oder nahezu gleicher) Phasenbeziehung (d.h. mit gleicher oder nahezu gleicher Phase) eintreffen (konstruktive Überlagerung von elektromagnetischen Wellen). Vorteilhafterweise ist eine solche Position der Ort des Mobilteils. Insbesondere ist im Sinne dieser Erfindung unter einer nahezu gleichen Phasenlage eine solche Phasenlage zu verstehen, bei welcher die Wellen mit einer relativen Phasenverschiebung zueinander an einer solchen Position, insbesondere am Ort des Mobilteils, eintreffen, welche kleiner als ein Achtel, vorzugsweise kleiner als ein Sechzehntel und idealerweise kleiner als ein Zweiunddreißigstel der Wellenlänge der elektromagnetischen Wellen ist. Geeigneterweise werden für eine optimale Energieversorgung des Mobilteils in Gestalt eines, insbesondere passiven, elektronischen Gerätes die Sendephasen der einzelnen Basisstationen derart eingestellt, dass sich genau in dem Raumpunkt, in dem sich das Mobilteil befindet, eine konstruktive Überlagerung der einkommenden elektromagnetischen Wellen einstellt.

Dies kann bei dem erfindungsgemäßen Verfahren vorzugsweise mittels der Kenntnis der Laufzeitphasen erfolgen. Basierend auf dieser Kenntnis werden die Sendephasen bevorzugt um den Laufzeitphasenversatz der verschiedenen Funkkanäle oder Übertragungswege zwischen den Basisstationen und dem Mobilteil ein- oder zurückgestellt, sodass die Signale mit identischer Phase am Mobilteil eintreffen.

Auf diese Weise ist es möglich, die Funkfeldstärke an dem jeweiligen Ort des Mobilteils im Vergleich zu einem System mit nur einer Basisstation zu erhöhen. Da die Funkfeldstärke ortsabhängig ist, ist die Kenntnis der genauen Mobilteilposition wünschenswert.

Die Erfindung nutzt daher zugleich eine Verbindung bestimmter Systemeigenschaften, nämlich sowohl der Energieversorgung des Mobilteils als auch einer Lokalisierung des Mobilteils und zweckmäßig zudem eine Positionsnachverfolgung (Tracking) des Mobilteils.

Bevorzugt werden bei dem erfindungsgemäßen Verfahren die Phasenlagen der von den zumindest zwei Basisstationen jeweils ausgesendeten elektromagnetischen Wellen derart eingestellt, dass die elektromagnetischen Wellen am Ort der Mobilstation gleichphasig eintreffen. Geeigneterweise wird hierzu die jeweilige Startphase (im Rahmen dieser Anmeldung auch Sendephase genannt) der elektromagnetischen Wellen am Ort der Basisstationen jeweils so gewählt, dass die unterschiedlichen Phasenlagen, die sich bei gleichen Startphasen aus unterschiedlichen Laufzeiten der elektromagnetischen Wellen ergeben würden, kompensiert werden. Zeckmäßigerweise sind bei dem erfindungsgemäßen System die Basisstationen zur, insbesondere zeitabhängigen, Stellung jeweils der Phasenlage der elektromagnetischen Wellen ausgebildet.

Die Kenntnis der Laufzeitphasen der elektromagnetischen Wellen ermöglicht gleichzeitig eine Lokalisierung bzw. Bestimmung der Position des Mobilteils. Dazu können verschiedene Algorithmen verwendet werden, die teilweise aus bereits bestehenden Lokalisierungssystemen bekannt sind. Daraus ergeben sich folglich auch Möglichkeiten, die Phasenstellungen der Basisstationen adaptiv vorzunehmen, um so eine Energieversorgung auch eines bewegten Mobilteils sicherzustellen.

In einer besonders vorteilhaften Weiterbildung des erfindungsgemäßen Verfahrens werden mittels der zwei oder zumindest zwei der Basisstationen zudem Signale, die von den Mobilteilen ausgesendet werden, empfangen und die Phaseninformation oder Phaseninformationen der empfangenen Signale ausgewertet. Diese Phaseninformationen dienen zur Lokalisierung und Positionsnachverfolgung des Mobilteils und können auch zur Optimierung der Energieversorgung des Mobilteils durch entsprechendes Nachführen der Sendephasen der Basisstationen verwendet werden.

Ebenso kann eine Vielzahl weiterer verschiedener bekannter Funklokalisierungssysteme oder -verfahren genutzt werden, bei welchen aus verschiedenen messbaren Größen der Wellenausbreitung zwischen Mobilteil und Basisstationen eine Positionsinformation des Mobilteils gewonnen werden kann. Solche Größen können geeigneterweise sein:
- die Empfangsfeldstärke am Ort des Mobilteils und/oder
- die Laufzeit/en von Signalen zwischen jeweils einer Basisstation und Mobilteil und/oder
- Laufzeitdifferenzen und/oder
- eine oder mehrere Winkelinformation/en des vom Mobilteil gesendeten und an einer Basisstation ankommenden Signals.

Zweckmäßig werden bei dem erfindungsgemäßen Verfahren über mehrere, in einem Raum verteilte, Basisstationen/Antennen elektromagnetische Wellen gleicher Leistung ausgesendet und über diese von einem Mobilteil gesendete elektromagnetische Wellen empfangen. Dies erfolgt auf kohärente Weise und wird mit einstellbaren Phasenbeziehungen durchgeführt. Um Störungen der Basisstation untereinander zu vermeiden, ist in einer Weiterbildung der Erfindung eine Steuerung für alle Basisstationen vorgesehen, so dass eine Anfrage von einer Basisstation an ein Mobilteil nicht als Kollision bzw. als Störsignal von einer anderen Basisstation interpretiert wird. Eine Anfrage an ein Mobilteil kann zweckmäßig nur mit einer eindeutigen Kennung einer Basisstation erfolgen.

Die Ermittlung und Einstellung der Phasen kann bei dem erfindungsgemäßen Verfahren auf verschiedene Arten und Weisen erfolgen. Etwa in Fällen, in denen auf Grund einer zu geringen Funkfeldstärke kein Mobilteil erkannt wird, kann die Phasenstellungen der einzelnen Basisstationen per Versuch und Irrtum durchgeführt werden. Die Phasen werden dabei derart iterativ optimiert, dass die vom Mobilteil empfangene Funkfeldstärke maximiert wird. Als Indikator kann ein Antwortsignal am Mobilteil herangezogen werden.

Ist eine genügend große Funkfeldstärke an dem Mobilteil bereits vorhanden, wird bei dem erfindungsgmäßen Verfahren die Phasenbestimmung im Falle einer sich zeitlich ändernden Position des Mobilteils anhand eines Bewegungsmodells geschätzt. Auf der Basis eines solchen Bewegungsmodells (z.B. Mobilteil bewegt sich eher gleichförmig) kann auf eine entsprechend gleichförmige zeitliche Entwicklung der optimalen Phasen geschlossen werden. Entsprechende mathematische Regelverfahren sind hierfür an sich bekannt (insbesondere Kalmanfilter).

Die Verwendung von mehreren Mobilteilen ist bei dem erfindungsgemäßen Verfahren ebenfalls denkbar. Dazu kann im Zeitmultiplexverfahren zwischen verschiedenen Sätzen optimaler Phasenkoeffizienten umgeschaltet werden und es können so jeweils die optimalen Koeffizienten für gegebene Positionen ausgewählt werden. Dadurch kann das erfindungsgemäße Verfahren mit mehreren Mobilteilen ausgeführt werden.

Eine besonders bevorzugte Weiterbildung des erfindungsgemäßen Verfahrens besteht darin, dass das Mobilteil zur Ermittlung optimaler Phasenkoeffizienten seinerseits ein Funksignal aussendet. Aufgrund der Reziprozität des Funkkanals kann dann die von den Basisstationen gemessene Phaseninformation des Empfangssignals in optimale Sendephasen umgerechnet werden. Diese Weiterbildung des erfindungsgemäßen Verfahrens kann dazu verwendet werden, um innerhalb eines oder weniger Lesezyklen die optimalen Phasenkoeffizienten zu bestimmen.

Aus der Kenntnis der Phasenkoeffizienten kann bei dem erfindungsgemäßen Verfahren auf die Position des Mobilteils zurückgeschlossen werden. Hierzu sind bei dem erfindungsgemäßen Verfahren die Basisstationen zweckmäßigerweise in einer oder mehreren Gruppen angeordnet, deren Empfangssignale algorithmisch miteinander verknüpft werden. Idealerweise sind die Basisstationen mit Abständen, insbesondere kleiner als die Wellenlänge der elektromagnetischen Wellen, voneinander entlang einer Geraden angeordnet. Unter diesen Bedingungen kann etwa aus den Phasendifferenzen der vom Mobilteil empfangenen Signale auf den Winkel, unter dem das Mobilteil von der Geraden dieser Basisstationen aus erscheint, zurückgerechnet werden. Entsprechende Verfahren sind unter dem Stichwort "Digital Beamforming" oder auch "digitale Strahlschwenkung" bekannt.

Neben der "digitalen Strahlschwenkung" ist auch eine "analoge Strahlschwenkung" denkbar, die mittels einer stark bündelnden Abstrahlcharakteristik, insbesondere einer Antennenkeule, abgestrahlt jeweils von einer Antenne einer Basisstation, realisiert ist. Abhängig von den Phasenstellungen der einzelnen Antenne innerhalb einer Antennengruppe kann eine solche Antennenkeule in verschiedene Richtungen geschwenkt werden. Der durch das Zusammenschalten von Antennen mehrerer Basisstationen erzeugte höhere Antennengewinn bewirkt in die bevorzugte Raumrichtung ebenfalls eine erhöhte Funkfeldstärke.

Weiterhin ist es möglich, auch aus der Empfangsfeldstärke des vom Mobilteil empfangenen Signals auf den Ort des Mobilteils rückzuschließen. Entsprechende Algorithmen sind an sich bekannt und Stand der Technik.

Weiterhin kann aus den Phasen der Basisstationen insgesamt, eine hinreichend große Anzahl von Basisstationen vorausgesetzt, auch bei recht allgemeiner Anordnung der Basisstationen auf die Position des Mobilteils geschlossen werden.

Aus dem zeitlichen Verlauf der entsprechenden Phasen und Empfangsfeldstärken kann auch mit Hilfe von Trackingalgorithmen eine Verbesserung der Positionsschätzung erzielt werden. Somit kann ein Bewegung eines Mobilteils erfasst und adaptiv die Phasenstellungen der Basisstation geregelt werden.

Das erfindungsgemäße System ist ein System von Basisstationen eines drahtlosen Kommunikationssystems. Bei dem erfindungsgemäßen System sind zumindest zwei der Basisstationen zur Sendung kohärenter elektromagnetischer Wellen ausgebildet.

Zweckmäßig ist das erfindungsgemäße System zur Ausführung eines Verfahrens wie zuvor erläutert ausgebildet.

Zur Realisierung der Energieversorgung und der damit verbundenen Reichweitenerhöhung sowie der Möglichkeit der Lokalisierung und Positionsnachverfolgung werden die Basisstationen mittels des erfindungsgemäßen Verfahrens synchron betrieben. Eine entsprechende Steuereinheit zur Ansteuerung der Basisstationen ist bevorzugt Bestandteil des erfindungsgemäßen Systems.

Geeigneterweise ist das erfindungsgemäße System von Basisstationen zur Durchführung des Zeitmultiplexverfahrens entsprechend dem erfindungsgemäßen Verfahren wie oben erläutert ausgebildet.

Besonders bevorzugt wird das erfindungsgemäße Verfahren zur Energieversorgung eines Mobilteils in Form eines RFID-Tags in einem Kommunikationssystem in Gestalt eines RFID-Systems durchgeführt. Das erfindungsgemäße System ist in vorteilhafter Weiterbildung der Erfindung ein RFID-System.

Nachfolgend wird die Erfindung anhand eines in der Zeichnung dargestellten Ausführungsbeispiels näher erläutert. Es zeigen:
- Fig. 1: ein erfindungsgemäßes System von Basisstationen zur Durchführung des erfindungsgemäßen Verfahrens während des Sendens elektromagnetischer Wellen an ein Mobilteil in einer Prinzipskizze in einer Draufsicht,
- Fig. 2: das erfindungsgemäße System gem. Fig. 1 während des Empfangs elektromagnetischer Wellen durch das Mobilteil in einer Prinzipskizze in einer Draufsicht,
- Fig. 3: ein weiteres Ausführungsbeispiel eines erfindungsgemäßen Systems von Basisstationen zur Durchführung des erfindungsgemäßen Verfahrens mit einer Gruppe von entlang einer Geraden angeordneten Basisstationen in einer Prinzipskizze in einer Draufsicht und
- Fig. 4: ein weiteres Ausführungsbeispiel eines erfindungsgemäßen Systems von Basisstationen zur Durchführung des erfindungsgemäßen Verfahrens mit einer Darstellung der Phasenbeziehungen der gesendeten elektromagnetischen Wellen in einer Prinzipskizze in einer Draufsicht.

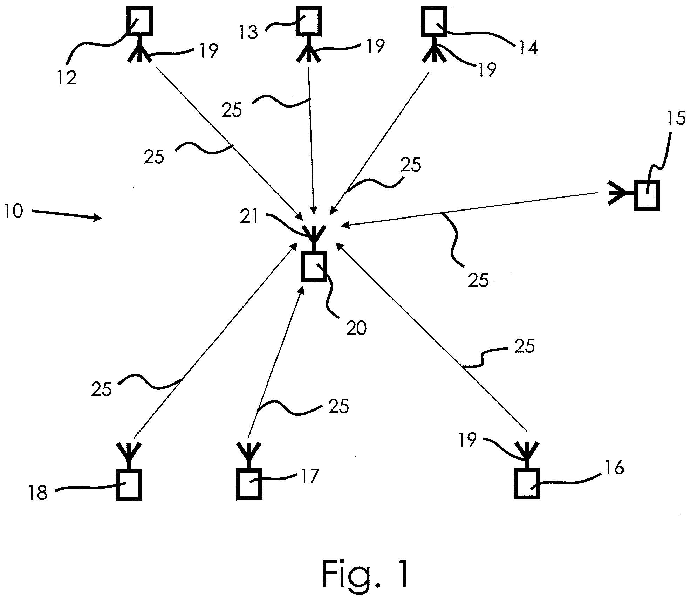

Das in Fig. 1 dargestellte erfindungsgemäße drahtlose Kommunikationssystem 10 umfasst mehrere Basisstationen 12, 13, 14, 15, 16, 17, 18. Die Basisstationen 12, 13, 14, 15, 16, 17, 18 senden mittels Antennen 19 zur Energieversorgung eines Mobilteils 20 gleichzeitig elektromagnetische Wellen 25 aus. Die elektromagnetischen Wellen 25 werden von dem Mobilteil 20 mittels einer Antenne 21 empfangen.

In dem dargestellten Ausführungsbeispiel senden die Basisstationen 12, 13, 14, 15, 16, 17, 18 die elektromagnetische Wellen 25 jeweils mit gleicher Leistung und auf kohärente Weise, d.h. mit einer jeweils vorgegebenen Phasenlage zueinander. Um Störungen der Basisstationen 12, 13, 14, 15, 16, 17, 18 untereinander zu vermeiden, ist eine Steuer- und Auswerteinrichtung (in Fig. 1 nicht explizit gezeigt) für sämtliche Basisstationen 12, 13, 14, 15, 16, 17, 18 vorgesehen, so dass eine Anfrage von einer der Basisstationen 12, 13, 14, 15, 16, 17, 18 an das Mobilteil 20 nicht als kollidierendes Signal oder Störsignal von einer anderen der Basisstationen 12, 13, 14, 15, 16, 17, 18 interpretiert wird. Eine Anfrage an das Mobilteil 20 erfolgt im dargestellten Ausführungsbeispiel mit einer eindeutigen Kennung jeweils einer der Basisstationen 12, 13, 14, 15, 16, 17, 18.

Die relativen Phasenlagen der von den Basisstationen 12, 13, 14, 15, 16, 17, 18 gesendeten elektromagnetischen Wellen 25 zueinander sind derart gewählt, dass sich die elektromagnetischen Wellen 25 am Ort des Mobilteils 20 konstruktiv überlagern. Die am Ort des Mobilteils 20 daher stark konzentrierte Energie des Funkfeldes wird mit der Antenne 21 des Mobilteils 20 aufgenommen und in diesem in elektrische Energie umgewandelt. Diese elektrische Energie ist zum Betrieb des Mobilteils 20 nutzbar.

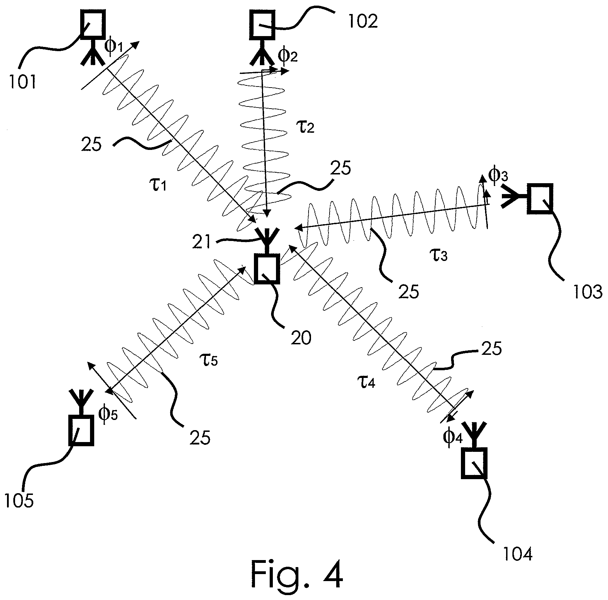

Dieses Prinzip ist zusätzlich anhand Fig. 4 anhand einer Darstellung der Phasenbeziehungen der jeweils von einer Basisstation gesendeten elektromagnetischen Wellen 25 veranschaulicht (wenngleich die Anordnung der Basisstationen gem. Fig. 4 von derjenigen gem. Fig. 1 abweicht, so ist das in Fig. 4 dargestellte Prinzip auf das Ausführungsbeispiel gemäß Fig. 1 wie auch auf sämtliche übrigen der erläuterten Ausführungsbeispiele in entsprechender Weise übertragbar): Die in Fig. 4 dargestellten Basisstationen 101, 102, 103, 104, 105 senden kohärent elektromagnetische Wellen 25 an das Mobilteil 20. Die elektromagnetischen Wellen 25 werden mittels der Basisstationen 101, 102, 103, 104, 105 jeweils mit einer eigenen Sendephase Φ₁, Φ₂, Φ₃, Φ₄, Φ₅ gesendet. Aufgrund der unterschiedlichen Abstände der Basisstationen 101, 102, 103, 104, 105 vom Mobilteil 20 weisen die elektromagnetischen Wellen 25 der einzelnen Basisstationen 101, 102, 103, 104, 105 jeweils unterschiedliche Laufzeiten τ₁, τ₂, τ₃, τ₄, τ₅ zum Mobilteil 20 auf. Die Sendephasen Φ₁, Φ₂, Φ₃, Φ₄, Φ₅ sind derart gewählt, dass die elektromagnetischen Wellen 25 mit identischer Phasenlage am Mobilteil 20 eintreffen. Auf diese Weise überlagern sich die elektromagnetischen Wellen 25 am Mobilteil 20 konstruktiv zu einem besonders starken Gesamtfeld.

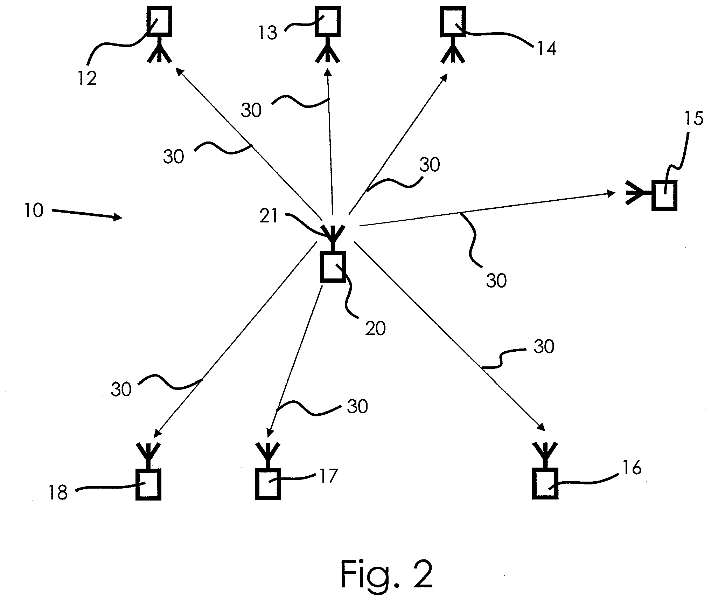

Im in Fig. 1 dargestellten Ausführungsbeispiel werden die relativen Phasenlagen der von den Basisstationen 12, 13, 14, 15, 16, 17, 18 gesendeten elektromagnetischen Wellen 25 derart ermittelt, dass das Mobilteil 20 ein Funksignal 30 aussendet (Fig. 2). Das Funksignal 30 wird von den Basisstationen 12, 13, 14, 15, 16, 17, 18 empfangen. Mittels der Steuer- und Auswerteinrichtung werden die Phasenlagen der von den Basisstationen 12, 13, 14, 15, 16, 17, 18 jeweils empfangenen elektromagnetischen Wellen 25 an den Orten jeweils der Basisstationen 12, 13, 14, 15, 16, 17, 18 zueinander bestimmt. Anhand der derart bestimmten Phasenlagen werden geeignete Sendephasen (vgl. Fig. 4) ermittelt. Eine derartige Bestimmung wird einmalig oder zeitlich wiederholt durchgeführt.

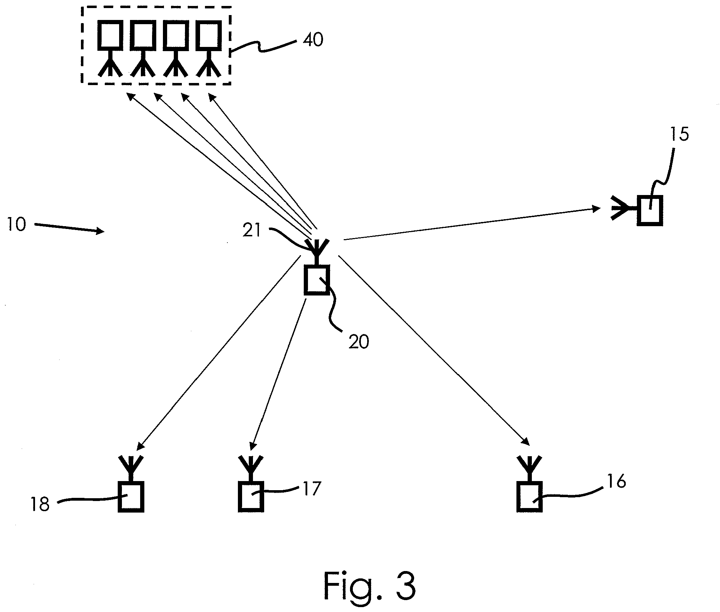

Das in Fig. 3 dargestellte Ausführungsbeispiel entspricht dem in den Fig. 1 und 2 dargestellten Ausführungsbeispiel. Zusätzlich allerdings wird bei der Durchführung des Verfahrens mittels des Systems gem. Fig. 3 aus der Kenntnis der Phasenkoeffizienten auf die Position des Mobilteils 20 geschlossen. Zu diesem Zweck ist eine Gruppe 40 von Basisstationen nah benachbart, d.h. mit Abständen zu den jeweils nächsten Nachbarn von weniger als einer Wellenlänge der elektromagnetischen Wellen 25 entlang einer Geraden angeordnet. Die von den Basisstationen der Gruppe 40 empfangenen Empfangssignale werden algorithmisch miteinander verknüpft. Aus den Phasendifferenzen der vom Mobilteil 20 empfangenen Signale wird in an sich (etwa aus den Techniken des "Digital Beamforming" oder der "digitalen Strahlschwenkung") bekannter Weise auf den Winkel, den die Richtung auf das Mobilteil 20 hin mit der Geraden, entlang der die Basisstationen der Gruppe 40 angeordnet sind, einschließt, geschlossen.

Neben der "digitalen Strahlschwenkung" ist in weiteren Ausführungsbeispielen auch eine "analoge Strahlschwenkung" genutzt, welche eine stark bündelnde Keule der von den Antennen einer Gruppe von Basisstationen abgestrahlten elektromagnetischen Wellen zur Folge hat. Abhängig von den Phasenstellungen einer einzelnen Antenne 19 innerhalb der Gruppe von Basisstationen kann diese Keule in verschiedene Richtungen geschwenkt werden. Der durch das Zusammenschalten der Antennen der Gruppe 40 von Basisstationen erzeugte höhere Antennengewinn bewirkt in die bevorzugte Raumrichtung ebenfalls eine erhöhte Funkfeldstärke.

In weiteren, nicht gesondert dargestellten Ausführungsbeispielen, welche im Übrigen den dargestellten Ausführungsbeispielen entsprechen, wird zusätzlich aus der Empfangsfeldstärke des vom Mobilteil 20 empfangenen Signals auf den Ort und/oder die Lage des Mobilteils 20 geschlossen. Die hierzu erforderlichen Algorithmen sind an sich bekannt.

Weiterhin können aus den Phasen der Basisstationen 12, 13, 14, 15, 16, 17, 18 insgesamt, eine hinreichend große Anzahl von Basisstationen vorausgesetzt, auch unter sehr allgemeinen Bedingungen, was die Lage der Basisstationen 12, 13, 14, 15, 16, 17, 18 angeht, Rückschlüsse auf die Position des Mobilteils gezogen werden.

Aus dem zeitlichen Verlauf der entsprechenden Sende- Φ₁, Φ₂, Φ₃, Φ₄, Φ₅ und/oder Empfangsphasen und Empfangsfeldstärken kann auch mit Hilfe von Trackingalgorithmen eine Verbesserung der Positionsschätzung erzielt werden. Somit können eine Bewegung des Mobilteils erfasst und adaptiv die Phasenstellungen der Basisstationen 12, 13, 14, 15, 16, 17, 18 geregelt werden.

In einem weiteren, nicht eigens gezeigten Ausführungsbeispiel, welches im Übrigen den dargestellten entspricht, werden mehrere Mobilteile mit Energie versorgt. Dazu wird im Zeitmultiplexverfahren zwischen verschiedenen Sätzen optimaler Phasenkoeffizienten umgeschaltet und so werden jeweils die optimalen Koeffizienten für die Positition je eines Mobilteils ausgewählt und eingestellt. Dadurch ist in diesem Ausführungsbeispiel das System von Basisstationen mehrteilnehmerfähig ausgeführt.

Beispielsweise ist das Mobilteil 20 in den erläuterten Ausführungsbeispielen ein RFID-Tag und die Basisstationen 12, 13, 14, 15, 16, 17, 18, 101, 102, 103, 104, 105 sind Basisstationen eines RFID-Systems. In weiteren Ausführungsbeispielen ist das Mobilteil 20 ein sonstiges Mobilteil und die Basisstationen 12, 13, 14, 15, 16, 17, 18, 101, 102, 103, 104, 105 bilden ein sonstiges funkbasiertes Kommunikationssystem.

## Patentansprüche

1. Verfahren zur Energieversorgung zumindest eines Mobilteils (20) in einem drahtlosen Kommunikationssystem (10) mit zwei oder mehr Basisstationen (12, 13, 14, 15, 16, 17, 18), bei welchem mittels zumindest zwei der Basisstationen (12, 13, 14, 15, 16, 17, 18) kohärent elektromagnetische Wellen (25) gesendet werden,
bei welchem eine oder mehrere relative Sendephasen (Φ₁, Φ₂, Φ₃, Φ₄, Φ₅) zwischen zwei oder mehreren kohärent gesendeten elektromagnetischen Wellen (25) eingestellt werden,
wobei eine oder mehrere Laufzeitphasen zwischen mittels zumindest zweien der Basisstationen (12, 13, 14, 15, 16, 17, 18) kohärent zum Mobilteil (20) gesendeten elektromagnetischen Wellen (25) erfasst und zur Wahl und/oder zur Einstellung der einen oder mehreren Sendephasen (Φ₁, Φ₂, Φ₃, Φ₄, Φ₅) herangezogen wird oder werden
und/oder
mittels des Mobilteils (20) zumindest ein Signal (30) ausgesendet wird, welches von zumindest zwei der Basisstationen (12, 13, 14, 15, 16, 17, 18) empfangen wird und eine oder mehrere Laufzeitphasen des von den zumindest zwei Basisstationen (12, 13, 14, 15, 16, 17, 18) empfangenen Signals (30) erfasst und zur Wahl und/oder zur Einstellung der einen oder mehreren Sendephasen (Φ₁, Φ₂, Φ₃, Φ₄, Φ_{5,}) herangezogen wird oder werden
und/oder
die Position und/oder der Bewegungszustand des Mobilteils (20), insbesondere anhand einer Empfangsfeldstärke vom Mobilteil (20) empfangener Signale, erfasst wird und abhängig von der erfassten Position die eine oder mehreren Sendephasen (Φ₁, Φ₂, Φ₃, Φ₄, Φ₅) gewählt und/oder geändert und/oder angepasst werden.

2. Verfahren nach Anspruch 1, bei welchem die eine oder die mehreren relativen Sendephasen (Φ₁, Φ₂, Φ₃, Φ₄, Φ₅) zwischen zwei oder mehreren kohärent gesendeten elektromagnetischen Wellen (25) mittels geeigneter Steuerung der Basisstationen (12, 13, 14, 15, 16, 17, 18) eingestellt werden.

3. Verfahren nach Anspruch 1 oder 2, bei welchem Energie eines elektrischen Feldes insbesondere der kohärent gesendeten elektromagnetischen Wellen (25) am Ort des zumindest einen Mobilteils (20) zur Energieversorgung des Mobilteils (20) genutzt wird.

4. Verfahren nach Anspruch 1, 2 oder 3, bei welchem die eine oder mehreren relativen Sendephasen (Φ₁, Φ₂, Φ₃, Φ₄, Φ₅,) nach Versuch und Irrtum ermittelt werden.

5. Verfahren nach einem der vorhergehenden Ansprüche, bei welchem eine oder mehrere Laufzeitphasen zeitlich aufeinanderfolgend oder kontinuierliche erfasst wird oder werden und abhängig von der oder den erfassten Laufzeitphasen oder ihrer oder deren zeitlicher Änderung die eine oder mehreren Sendephasen (Φ₁, Φ₂, Φ₃, Φ₄, Φ₅) gewählt und/oder geändert und/oder angepasst werden.

6. Verfahren nach einem der vorhergehenden Ansprüche, bei welchem die kohärent gesendeten/zu sendenden elektromagnetischen Wellen (25) mittels eines digitalen und/oder analogen Strahlschwenkungsverfahrens gesendet werden.

7. System von Basisstationen (12, 13, 14, 15, 16, 17, 18) eines drahtlosen Kommunikationssystems, bei welchem zumindest zwei der Basisstationen (12, 13, 14, 15, 16, 17, 18) zur Sendung kohärenter elektromagnetischer Wellen (25) ausgebildet sind und welches zur Ausführung eines Verfahrens nach einem der Ansprüche 1 bis 5 ausgebildet ist..

8. System nach Anspruch 7, bei welchem eine Steuereinheit zur Steuerung einer oder mehrerer Basisstationen (12, 13, 14, 15, 16, 17, 18) derart vorhanden ist, dass eine oder mehrere Sendephasen (Φ₁, Φ₂, Φ₃, Φ₄, Φ₅) zwischen den kohärent gesendeten elektromagnetischen Wellen (25) einstellbar oder änderbar ist.

9. System nach einem der vorhergehenden Ansprüche, bei welchem Mittel zur Erfassung der Position des Mobilteils (20) vorhanden sind, insbesondere umfassend Mittel zur Erfassung einer oder mehrerer Laufzeitphasen und/oder Empfangsfeldstärken insbesondere am Ort des Mobilteils (20) und/oder einer oder mehrerer Basisstationen (12, 13, 14, 15, 16, 17, 18).

## Claims

1. Method for supplying power to at least one mobile part (20) in a wireless communication system (10) having two or more base stations (12, 13, 14, 15, 16, 17, 18), in which at least two of the base stations (12, 13, 14, 15, 16, 17, 18) are used to coherently send electromagnetic waves (25), in which one or more relative sending phases (Φ₁, Φ₂, Φ₃, Φ₄, Φ₅) between two or more coherently sent electromagnetic waves (25) are adjusted, wherein one or more propagation delay phases between electromagnetic waves (25) that are coherently sent to the mobile part (20) by means of at least two of the base stations (12, 13, 14, 15, 16, 17, 18) is or are sensed and used to select and/or to adjust the one or more sending phases (Φ₁, Φ₂, Φ₃, Φ₄, Φ₅) and/or the mobile part (20) is used to transmit at least one signal (30) that is received by at least two of the base stations (12, 13, 14, 15, 16, 17, 18) and one or more propagation delay phases of the signal (30) received by the at least two base stations (12, 13, 14, 15, 16, 17, 18) is or are sensed and used to select and/or to adjust the one or more sending phases (Φ₁, Φ₂, Φ₃, Φ₄, Φ₅) and/or the position and/or the motion state of the mobile part (20) is sensed, particularly from a reception field strength of signals received from the mobile part (20), and the sensed position is taken as a basis for selecting and/or changing and/or customizing the one or more sending phases (Φ₁, Φ₂, Φ₃, Φ₄, Φ₅).

2. Method according to Claim 1, in which the one or more relative sending phases (Φ₁, Φ₂, Φ₃, Φ₄, Φ₅) between two or more coherently sent electromagnetic waves (25) are adjusted by means of suitable control of the base stations (12, 13, 14, 15, 16, 17, 18) .

3. Method according to Claim 1 or 2, in which energy in an electrical field particularly from the coherently sent electromagnetic waves (25) is used at the location of the at least one mobile part (20) to supply power to the mobile part (20) .

4. Method according to Claim 1, 2 or 3, in which the one or more relative sending phases (Φ₁, Φ₂, Φ₃, Φ₄, Φ₅) are ascertained on the basis of trial and error.

5. Method according to one of the preceding claims, in which one or more propagation delay phases is or are sensed at successive times or continuously and the sensed propagation delay phase(s) or the change therein over time is or are taken as a basis for selecting and/or changing and/or customizing the one or more sending phases (Φ₁, Φ₂, Φ₃, Φ₄, Φ₅).

6. Method according to one of the preceding claims, in which the coherently sent/sendable electromagnetic waves (25) are sent by means of a digital and/or analog beamforming method.

7. System of base stations (12, 13, 14, 15, 16, 17, 18) in a wireless communication system, in which at least two of the base stations (12, 13, 14, 15, 16, 17, 18) are designed to send coherent electromagnetic waves (25) and which is designed to carry out a method according to one of Claims 1 to 5.

8. System according to Claim 7, in which a control unit for controlling one or more base stations (12, 13, 14, 15, 16, 17, 18) is existent such that one or more sending phases (Φ₁, Φ₂, Φ₃, Φ₄, Φ₅) between the coherently sent electromagnetic waves (25) can be adjusted or changed.

9. System according to one of the preceding claims, in which means for sensing the position of the mobile part (20) are existent, particularly comprising means for sensing one or more propagation delay phases and/or reception field strengths particularly at the location of the mobile part (20) and/or of one or more base stations (12, 13, 14, 15, 16, 17, 18).

## Revendications

1. Procédé d'alimentation en énergie d'au moins un élément mobile (20) dans un système de communication sans fil (10) comportant deux ou plusieurs stations de base (12, 13, 14, 15, 16, 17, 18), selon lequel des ondes électromagnétiques (25) sont émises de manière cohérente au moyen d'au moins deux des stations de base (12, 13, 14, 15, 16, 17, 18),
selon lequel sont réglées une ou plusieurs phases d'émission relatives (Φ1, Φ2, Φ3, Φ4, Φ5) entre deux ou plusieurs ondes électromagnétiques (25) émises de manière cohérente,
une ou plusieurs phases de temps de propagation entre des ondes électromagnétiques (25) envoyées de manière cohérente à l'élément mobile (20) au moyen d'au moins deux des stations de base (12, 13, 14, 15, 16, 17, 18) étant détectées et utilisées pour la sélection et/ou le réglage d'une ou des plusieurs phases d'émission (Φ1, Φ2, Φ3, Φ4, Φ5)
et/ou
au moyen de l'élément mobile (20) étant émis au moins un signal (30) qui est reçu par au moins deux des stations de base (12, 13, 14, 15, 16, 17, 18) et une ou plusieurs phases de temps de propagation du signal (30) reçu par les au moins deux stations de base (12, 13, 14, 15, 16, 17, 18) étant détectées et utilisées pour la sélection et/ou le réglage d'une ou des plusieurs phases d'émission (Φ1, Φ2, Φ3, Φ4, Φ5)
et/ou
la position et/ou l'état de mouvement de l'élément mobile (20) étant détectés en particulier à l'aide d'une intensité de champ de réception de signaux reçus par l'élément mobile (20) et l'une ou les plusieurs phases d'émission (Φ1, Φ2, Φ3, Φ4, Φ5) étant choisies et/ou modifiées et/ou adaptées en fonction de la position détectée.

2. Procédé selon la revendication 1, selon lequel l'une ou les plusieurs phases d'émission relatives (Φ1, Φ2, Φ3, Φ4, Φ5) entre deux ou plusieurs ondes électromagnétiques (25) émises de manière cohérente sont réglées au moyen d'une commande appropriée des stations de base (12, 13, 14, 15, 16, 17, 18).

3. Procédé selon la revendication 1 ou 2, selon lequel l'énergie d'un champ électrique, en particulier des ondes électromagnétiques (25) émises de manière cohérente, est utilisée à l'emplacement de l'au moins un élément mobile (20) pour l'alimentation en énergie de l'élément mobile (20).

4. Procédé selon la revendication 1, 2 ou 3, selon lequel l'une ou les plusieurs phases d'émission relatives (Φ1, Φ2, Φ3, Φ4, Φ5) sont déterminées par essai et erreur.

5. Procédé selon l'une des revendications précédentes, selon lequel une ou plusieurs phases de temps de propagation sont détectées successivement dans le temps ou en continu et l'une ou les plusieurs phases d'émission (Φ1, Φ2, Φ3, Φ4, Φ5) sont choisies et/ou modifiées et/ou adaptées en fonction de la ou des phases de temps de propagation détectées ou de sa ou de leur modification temporelle.

6. Procédé selon l'une des revendications précédentes, selon lequel les ondes électromagnétiques (25) émises / à émettre de manière cohérente sont émises au moyen d'un procédé de balayage numérique et/ou analogique.

7. Système de stations de base (12, 13, 14, 15, 16, 17, 18) d'un système de communication sans fil, selon lequel au moins deux des stations de base (12, 13, 14, 15, 16, 17, 18) sont conçues pour émettre des ondes électromagnétiques cohérentes (25) et qui est conçu pour exécuter un procédé selon l'une des revendications 1 à 5.

8. Système selon la revendication 7, selon lequel une unité de commande destinée à commander une ou plusieurs stations de base (12, 13, 14, 15, 16, 17, 18) est présente de telle sorte qu'il est possible de régler ou de modifier une ou plusieurs phases d'émission (Φ1, Φ2, Φ3, Φ4, Φ5) entre les ondes électromagnétiques (25) émises de manière cohérente.

9. Système selon l'une des revendications précédentes, selon lequel sont présents des moyens de détection de la position de l'élément mobile (20), comprenant plus particulièrement des moyens de détection d'une ou de plusieurs phases de temps de propagation et/ou intensités de champ de réception en particulier à l'emplacement de l'élément mobile (20) et/ou d'une ou de plusieurs stations de base (12, 13, 14, 15, 16, 17, 18).
